# EUROPEAN PATENT SPECIFICATION

(11) **EP 1 840 393 B1**
(45) Date of publication and mention of the grant of the patent: **09.06.2010**
(21) Application number: 07006427.4
(22) Date of filing: 28.03.2007
(51) Int. Cl.: F16C 32/04, G01M 13/04, F16C 17/12, F16C 17/24, F25B 11/04, F04D 29/056

(54) **Compressor for fuel cell**
Kompressor für Brennstoffzelle
Compresseur pour pile à combustible

(30) Priority: 30.03.2006 JP 2006094366
(43) Date of publication of application: 03.10.2007
(73) Proprietor: JTEKT Corporation, Osaka-shi Osaka 542-8502 (JP)
(72) Inventor: Taniguchi, Manabu, Osaki-shi, Osaka 542-8502 (JP); Ueyama, Hirochika, Osaki-shi, Osaka 542-8502 (JP); Miyagawa, Yasutaka, Osaki-shi, Osaka 542-8502 (JP)
(74) Representative: Weber, Joachim

(56) References cited:
- WO-A-94/29597
- JP-A- 7 091 760
- US-A1- 2002 025 268
- US-A1- 2004 005 228

## Description

### BACKGROUND OF THE INVENTION

This invention relates to a compressor for a fuel cell which is provided at an oxygen supply side of a fuel cell apparatus for producing energy from hydrogen and oxygen, and supplies compressed air to a fuel cell, and more particularly to a compressor for a fuel cell suitable for being mounted on a fuel cell vehicle.

Such a compressor is known from WO 94/29597 A.

Prototypes of fuel cell vehicles, running using a fuel cell mounted thereon, have already been manufactured, and there has been proposed in JP-A-2002-70762 Publication a scroll compressor suited for use as a compressor for supplying compressed air to a fuel cell of a fuel cell vehicle.

As a compressor other than the scroll type, there is known a centrifugal compressor (also called a turbine compressor) in which a rotation shaft having an impeller formed at one end thereof is rotated within a casing, and the air is compressed in a space within a gas passage portion of the casing by rotation of the impeller (JP-A-7-91760 Publication).

A compact design, a cost reduction and a lightweight design have been important tasks for a fuel cell apparatus used in a fuel cell vehicle, and a compressor has been required to have a more compact design.

Therefore, instead of using the scroll compressor of the above Patent Literature 1 which is a kind of displacement compressor, it may be proposed to use a centrifugal compressor of the non-displacement type which is not subjected to a compression variation, and can be formed into a compact design. However, in the centrifugal compressor, a variation in axial force acting on the impeller is large, and therefore it is necessary to secure the durability of an associated bearing device. And besides, in the fuel cell vehicle, a low-speed rotation in an idling condition and a high-seed rotation in a normal running condition are continuously repeated, and therefore the compressor has further been required to be advantageous for use in the high-speed rotation and to have the excellent durability.

### SUMMARY OF THE INVENTION

In view of the above circumstances, it is an object of this invention to provide a compressor for a fuel cell in which its compact design is achieved by using a centrifugal compressor, and a variation in axial force due to rotation of an impeller (which is a problem to be solved for achieving the compact design) is absorbed, thereby providing the compressor which is advantageous for use in high-speed rotation, and besides has excellent durability.

In order to achieve the object, the present invention is characterized by having the following arrangement.
(1) A compressor for a fuel cell-comprising:
   a casing;
   a rotation shaft including an impeller formed at one end thereof and rotatable within the casing;
   a pair of radial foil bearings for supporting the rotation shaft in a radial direction thereof, the pair of radial foil bearing being mounted in concentric relation to the rotation shaft;
   a control-type axial (active) magnetic bearing for supporting the rotation shaft in an axial direction, the control-type axial magnetic bearing being opposed to the rotation shaft in the axial direction; and
   a control device that controls the rotation shaft, and includes a bearing life diagnostic unit for accumulating times during which a rotational speed of the rotation shaft is below a predetermined value to obtain a cumulative contact time, judges a bearing lifetime based on the obtained cumulative (accumulated) contact time,
   wherein air is compressed in a space within a gas passage portion of the casing by rotation of said impeller, and is supplied to the fuel cell.
(2) The compressor according to (1), wherein the bearing life diagnostic unit includes a warning unit for giving a warning to a driver when the cumulative contact time reaches a predetermined warning time, and an activation disenabling unit for disenabling an activation of an automobile when the cumulative contact time reaches a predetermined activation-disenabling time larger than the predetermined warning time.

The radial foil bearing comprises, for example, a flexible bearing foil having a bearing surface radially opposed to the rotation shaft, a resilient member supporting the bearing foil, and a bearing housing holding the bearing foil and the resilient member between it and the rotation shaft.

As the control-type axial magnetic bearing, a suitable one of various types employed in a 5-axis control magnetic bearing device can be used, and one example of such magnetic bearings comprises a permanent magnet and an axial electromagnet, and another example comprises a pair of axial electromagnets.

In the above bearing device, the support of the rotation shaft in the radial direction is undertaken by the radial foil bearings, and when the rotation shaft is rotated, the ambient air is drawn into a gap between the bearing foil and the rotation shaft to produce a pressure (dynamic pressure), thereby supporting the rotation shaft in a non-contact manner. The support of the rotation shaft in the axial direction is undertaken by the axial magnetic bearing, and by controlling an electric current flowing through an axial electromagnet, the rotation shaft is supported in a non-contact manner.

In a centrifugal compressor, when a rotation shaft is rotated at high speed by a motor, the air is flowed to an impeller, provided at one end of the rotation shaft, in an axial direction, and the compressed air is flowed out in a radial direction, and therefore a large axial force acts on the rotation shaft. Therefore, in the case where the support of the rotation shaft in the axial direction is effected by an axial foil bearing, there is a possibility that the rigidity of the bearing is insufficient. On the other hand, in the case where the support in the axial direction is effected by the axial magnetic bearing, a load capacity increases, and by changing the control current in accordance with a variation in the axial force, the non-contact support in the axial direction can be secured even for a variation in rotation load.

The times during which the rotational speed of the rotation shaft has been below the predetermined time are accumulated so as to obtain the cumulative contact time during which the radial foil bearings have been in contact with the rotation shaft, and the thus obtained cumulative contact time is used as data for diagnosing the lifetime of the radial foil bearings. The predetermined value of the rotational speed is the minimum speed at which the radial foil bearings can be regarded as being in a non-contact condition, and this predetermined value is determined taking into consideration a clearance between the rotation shaft and a top foil of each radial foil bearing. In the case of a fuel cell vehicle, this predetermined value is, for example, about 5,000 rpm. The radial foil bearing utilizes a dynamic pressure, and because of this characteristic, the radial foil bearing will not be brought into a complete non-contact condition before the rotational speed reaches a certain level, and therefore wear of the radial foil bearing proceeds before the non-contact condition is achieved, so that its bearing performance is lowered. T-herefore, a time during which the radial foil bearing has been in contact with the rotation shaft is regarded as a time during which the rotational speed of the rotation shaft has been below the predetermined value, and this is used for diagnosing the lifetime of the bearing, and by doing so, for example, a breakdown of the automobile such as an accidental stop of the running can be prevented.

The control-type axial magnetic bearing comprises, for example, an impeller-side permanent magnet, and an anti-impeller-side axial electromagnet opposed to the permanent magnet through a flange portion of the rotation shaft. Therefore, the axial electromagnet is arranged such that its attractive force is exerted in a direction opposite to the direction of an axial force produced by rotation. With this construction, the length of the compressor in the axial direction can be made shorter as compared with an ordinary axial magnetic bearing comprising a pair of axial electromagnets, and therefore a natural frequency of the rotation shaft increases so that it can be rotated at high speed, and besides a compact design and a lightweight design can be achieved. When a control current is flowed through an electromagnet coil of the axial electromagnet, the rotation shaft is attracted toward the anti-impeller-side.

In the case where the axial magnetic bearing comprises the permanent magnet and the axial electromagnet, the axial electromagnet (which forms, together with the permanent magnet, a set) comprises an electromagnet yoke, and an electromagnet coil, and may be separate from each radial foil bearing, but the axial electromagnet may be formed integrally with one of the radial foil bearings.

When the axial electromagnet is formed integrally with the radial foil bearing, the length in the axial length can be further reduced, so that the compacter design can be achieved. The bearing, in which the electromagnet of the axial magnetic bearing is integrally formed with the radial foil bearing, comprises a flexible bearing foil having a bearing surface radially opposed to the rotation shaft, an outer ring which holds the bearing foil between it and the rotation shaft and has an annular recess formed in one end surface thereof, and an electromagnet coil which is fitted in the recess in the outer ring (serving also as an electromagnet yoke) and forms, together with the outer ring, the axial electromagnet. The axial electromagnet, comprising the outer ring (serving also as the electromagnet yoke) and the electromagnet coil, is opposed to the permanent magnet (mounted on the casing) through the flange portion, and the axial magnetic bearing is formed by the axial electromagnet and the permanent magnet.

In the case where the axial magnetic bearing comprises a pair of axial electromagnets, the axial electromagnets are preferably formed integrally with the radial foil bearings, respectively. With this construction, the length in the axial direction can be reduced, and the compact design, while using the pair of axial electromagnets, can be secured.

In the fuel cell compressor of the present invention, the rotation shaft is supported by the radial foil bearings (dynamic pressure gas bearings) in the radial direction, and is supported by the control-type axial magnetic bearing in the axial direction. Therefore, the shortening of a fatigue life of the bearing due to high-speed rotation is suppressed, and besides there is no need to provide the function of circulating oil for lubricating purposes, and therefore the compact design of the compressor can be achieved. Furthermore, an axial load produced by rotation of the impeller of the centrifugal compressor is received by the control-type axial magnetic bearing, and therefore the load capacity (axial rigidity) increases, and the stability of the rotation is enhanced, and any load due to axial contact will not develop in the radial foil bearings, and therefore the durability of the radial foil bearings are enhanced.

Furthermore, in the bearing life diagnostic unit, the times during which the rotational speed of the rotation shaft has been below the predetermined time are accumulated so as to obtain the cumulative contact time during which the radial foil bearings have been in contact with the rotation shaft, and the thus obtained cumulative contact time is used as data for diagnosing the lifetime of the radial foil bearings. Therefore, a malfunction of the fuel cell (for example, an accidental stop of the running of a fuel cell vehicle having this fuel cell mounted thereon, etc.,) can be prevented.

### BRIEF DESCRIPTION OF THE DRAWINGS

Fig. 1 is a longitudinal cross-sectional view schematically showing a first embodiment of a fuel cell compressor of the present invention.
Fig. 2 is a transverse cross-section showing a radial foil bearing used in the fuel cell compressor of the invention.
Fig. 3 is a block diagram schematically showing the overall construction of a control device.
Figs. 4A and 4B are a graph showing the relation between a clearance and a rotational speed as one example and a diagram explaining the clearance.
Fig. 5 is a block diagram showing a bearing life diagnostic portion of the control device.
Fig. 6 is a longitudinal cross-sectional view schematically showing a second embodiment of a fuel cell compressor of the present invention,
Fig. 7 is a longitudinal cross-sectional view schematically showing a third embodiment of a fuel cell compressor of the present invention.

### DETAILED DESCRIPTION OF PREFERRED EMBODIMENTS

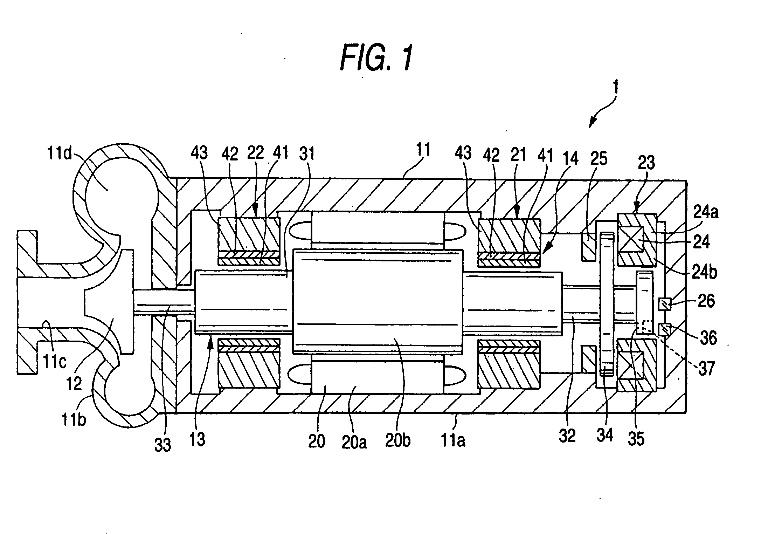

Preferred embodiments of the present invention will now be described with reference to the drawings. In the following description, the right side in Fig. 1 will be referred to as the front side, while the left side will be referred to as the rear side.

Fig. 1 schematically shows the construction of a first embodiment of a fuel cell compressor of the invention. The compressor 1 for a fuel cell is a non-displacement type centrifugal compressor, and comprises a sealed casing 11 of a substantially cylindrical shape disposed on a horizontal axis extending in the front-rear direction, a rotation shaft (horizontal shaft) 13 having an impeller 12 formed at a rear end thereof and rotatable within the casing 11, a bearing device 14 supporting the rotation shaft 13, and a control device 61 for controlling the rotation shaft 13 and the bearing device 14.

The casing 11 includes a front-side rotation shaft support portion 11a, and a rear-side gas passage portion 11b within which the impeller 12 is disposed.

The rotation shaft 13 is in the form of a stepped shaft, and is disposed in a space within the rotation shaft support portion 11a.

A built-in motor 20 for rotating the rotation shaft 13 at high speed, a pair of front and rear radial foil bearings 21 and 22 supporting the rotation shaft 13 in a radial direction, and a control-type axial (active) magnetic bearing 23 (comprising a set of magnets) supporting the rotation shaft 13 in the axial direction (the front-rear direction) are mounted on the inner periphery of the rotation shaft support portion 11a.

The motor 20 comprises a stator 20a formed on the rotation shaft support portion 11a, and a rotor 20b formed on the rotation shaft 13.

The bearing device 14 comprises the front and rear radial foil bearings 21 and 22, and the axial magnetic bearing 23.

A gas inlet passage 11c is provided at a rear end of the space within the gas passage portion 11b. When the rotation shaft 13 is rotated, the impeller 12 rotates, and by rotation of the impeller 12, the air flows through the gas inlet passage 11c into the space 11d within the gas passage portion 11b, and is compressed in this space 11d, and is discharged via a gas flow-out passage (not shown) leading to the space 11d. A gap of a predetermined size is formed between an inner surface of the gas passage portion 11b and the impeller 12 so as to secure a compression performance.

The stepped rotation shaft 13 includes a larger-diameter portion 31 having the rotor 20b of the motor 20 formed at an axially-central portion thereof, front and rear smaller-diameter portions 32 and 33 extending respectively from front and rear ends of the larger-diameter portion 31, and a flange portion 34 formed at an axially-central portion of the front smaller-diameter portion 32. The impeller 12 is mounted on a rear end portion of the rear smaller-diameter portion 33, and the radial foil bearings 21 and 22 are provided respectively at the opposite end portions of the larger-diameter portion 31.

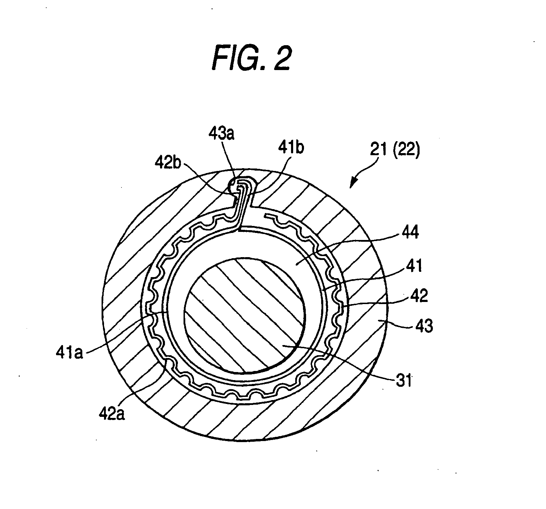

As shown in Fig. 2, each of the radial foil bearings 21 and 22 comprises a flexible top foil (bearing foil) 41 disposed radially outwardly of the rotation shaft larger-diameter portion 31 with a bearing gap 44 formed therebetween, a bump foil (resilient member) 42 disposed radially outwardly of the top foil 41, and an outer ring (bearing housing) 43 disposed radially outwardly of the bump foil 42.

The top foil 41 comprises a strip-like stainless steel sheet, and is manufactured by forming the strip-like stainless steel sheet into a cylindrical shape by rolling in such a manner that its longitudinally-opposite ends are disposed immediately adjacent to each other, that is, do not overlap each other in the circumferential direction, and then by stamping and radially outwardly raising axially-opposite end portions of one of the adjacent end portions of the cylindrically-shaped stainless steel sheet, and then by bending distal ends of the stamped portions. The portion of the cylindrical portion 41a other than the stamped portions serves as a main portion of the top foil 41, and the stamped portions 41b serve as engagement portions of the top foil 41.

The bump foil 42 includes a cylindrical portion 42a formed by forming a corrugated stainless steel sheet into a cylindrical shape, and an engagement portion 42b extending from one end of the stainless steel sheet of the cylindrical portion 42a and disposed radially outwardly of the cylindrical portion 42a.

A generally radially-extending engagement groove 43a is formed in an inner peripheral surface of the outer ring 43. The cylindrical portion 42a of the bump foil 42 is disposed in contiguous relation to the inner peripheral surface of the outer ring 43, and the engagement portion 42b of the bump foil 42 is engaged in the engagement groove 43a formed in the outer ring 43, thus mounting the bump foil 42 on the outer ring 43. The cylindrical portion 41a of the top foil 41 is interposed between the bump foil 42 and the rotation shaft larger-diameter portion 31, and the engagement portions 41b of the top foil 41 are engaged in the engagement groove 43a formed in the outer ring 43, thus mounting the top foil 41 on the outer ring 43.

In each of the radial foil bearings 21 and 22, the top foil 41 is manufactured by forming the strip-like stainless steel sheet into the cylindrical shape by rolling in such a manner that its longitudinally-opposite ends are disposed immediately adjacent to each other, that is, do not overlap each other in the circumferential direction, and therefore the top foil 41 has a uniform radius of curvature over the entire circumference thereof, and has a high degree of roundness. Therefore, the supporting performance for the rotation shaft 13 is high, and floating characteristics of the rotation shaft 13 are good.

Incidentally, each of the radial foil bearings 21 and 22 is not limited to the above construction, and may be replaced by a foil bearing comprising a bearing foil comprising a plurality of flexible foil pieces each having a bearing surface opposed to the rotation shaft, and an outer ring holding the bearing foil between it and the rotation shaft (although this type is not shown in the drawings).

The axial magnetic bearing 23 comprises an axial electromagnet 24 and a permanent magnet 25 which are mounted on the rotation shaft support portion 11a of the casing 11 and are opposed to each other through the flange portion 34 of the rotation shaft 13. The axial electromagnet 24 comprises a yoke 24a and a coil 24b. The direction of a force acting on the impeller 12 upon rotation is the rearward direction (left-hand direction in Fig. 1), and therefore the permanent magnet 25 is disposed at the rear side of the flange portion 34, while the axial electromagnet 24 is disposed at the front side of the flange portion 34 so that its attractive force can be exerted in a direction opposite to the direction of the axial force produced by the rotation.

An axial position sensor 26 for detecting an axial position of the rotation shaft 13 is mounted on a rear surface of a front wall of the rotation shaft support portion 11a of the casing 11, and is opposed to a center portion of a front surface of a target portion 35 (made of soft magnetic stainless steel) formed at a front end of the smaller-diameter portion 32 of the rotation shaft 13 in concentric relation thereto. Further, a rotation sensor 36 for detecting the speed of rotation of the rotation shaft 13 is mounted on the rear surface of the front wall of the rotation shaft support portion 11a of the casing 11, and is so disposed as to be opposed to a recess 37 formed in an outer peripheral portion of the front surface of the target portion 35. Although only one recess 37 shown in the drawings, a plurality of recesses 37 may be provided at equal intervals in the circumferential direction.

Based on the position of the rotation shaft 13 detected by the position sensor 26 and the rotational speed of the rotation shaft 13 detected by the rotation sensor 36, the control device 61 controls electric current flowing through the electromagnet coil 24b of the axial magnetic bearing 23. The current to be flowed through the coil 24b is so controlled that an attractive force which is balanced with a force acting on the impeller upon rotation and an attractive force of the permanent magnet 25 can be produced by the axial electromagnet 24. By doing so, the rotation shaft 13 is supported in a non-contact manner in a predetermined position in the axial direction.

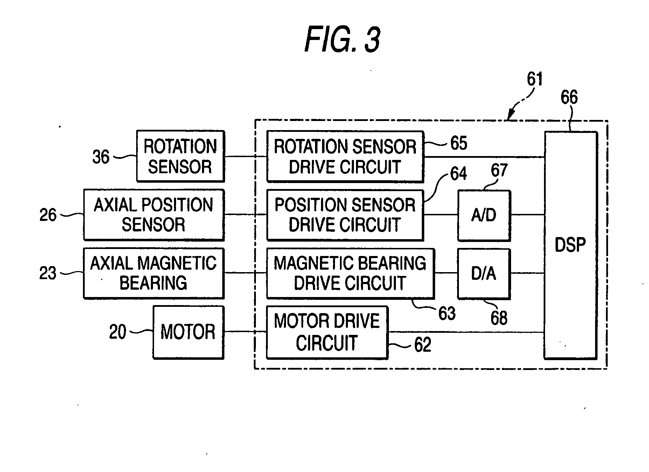

As shown in Fig. 3, the control device 61 includes a motor drive circuit 62, a magnetic bearing drive circuit 63, a position sensor drive circuit 64, a rotation sensor drive circuit 65, a DSP 66 serving as a software-programmable digital processor, an A/D converter 67, and a D/A converter 68. DSP is an abbreviation of a digital signal processor, and the digital signal processor means special-purpose hardware which inputs digital signals thereinto, and outputs digital signals, and is capable of programming software, and is capable of high-speed real time processing.

The position sensor drive circuit 64 computes an axial position of the rotation shaft 13 based on a distance signal (which is an output of the position sensor 26), and outputs a position signal (which is the result of this computation) to the DSP 66 via the A/D converter 67.

When a size of a gap between the axial position sensor 26 and the target 35 is changed while an AC current is flowing through the coil of this sensor 26, an inductance change occurs, so that the axial position sensor 26 outputs a distance signal proportional to the size of the gap between the sensor 26 and the target 35. The position sensor drive circuit 64 outputs a signal (position signal) proportional to an axial displacement of the rotation shaft 13 relative to a target floating position, the axial displacement being zero (0) when the rotation shaft 13 is disposed at the target floating position.

The output of the rotation sensor 36 changes in proportion to the size of a gap between this sensor 36 and the target 35. The size of the gap between the rotation sensor 36 and the target 36 at the time when the portion of the target 35 other than the recess 37 is opposed to the rotation sensor 36 is different from the size of the gap therebetween at the time when the recess 37 is opposed to the rotation sensor 36, and therefore the output of the rotation sensor 36 changes each time the recess 37 comes to this opposed position. Therefore, the rotation sensor 36 generates a pulse (or pulses) equal in number to the recess (or recesses) 37 per rotation of the rotation shaft 13, and the output of the rotation sensor 36 is fed as a speed detection signal from the rotation sensor drive circuit 65 to the DSP 66.

Based on the speed detection signal from the rotation sensor drive circuit 65 and the digital position signal (representative of the position of the rotation shaft 13) from the A/D converter 67, the DSP 66 outputs an exciting current signal (for the electromagnet 24 of the axial magnetic bearing 23) to the axial bearing drive circuit 63 via the D/A converter 68. Then, the drive circuit 63 supplies an exciting current, corresponding to the exciting current signal from the DSP 66, to the electromagnet 24 of the magnetic bearing 23, so that the rotation shaft 13 is supported in a non-contact condition at the target floating position.

The DSP 66 computes the rotational speed of the rotation shaft 13 from the rotational speed detection signal fed from the rotation sensor drive circuit 65, and outputs a rotational speed command signal for controlling the rotation of the motor 20 to the motor drive circuit 62 based on this computation result. The motor drive circuit 62 includes an inverter, etc., and controls the rotational speed of the motor 20 based on the rotational speed command signal. As a result, the rotation shaft 13, while supported in a non-contact condition at the target floating position by the radial foil bearings 21 and 22 and the axial magnetic bearing 23, is rotated at high speed by the motor 20.

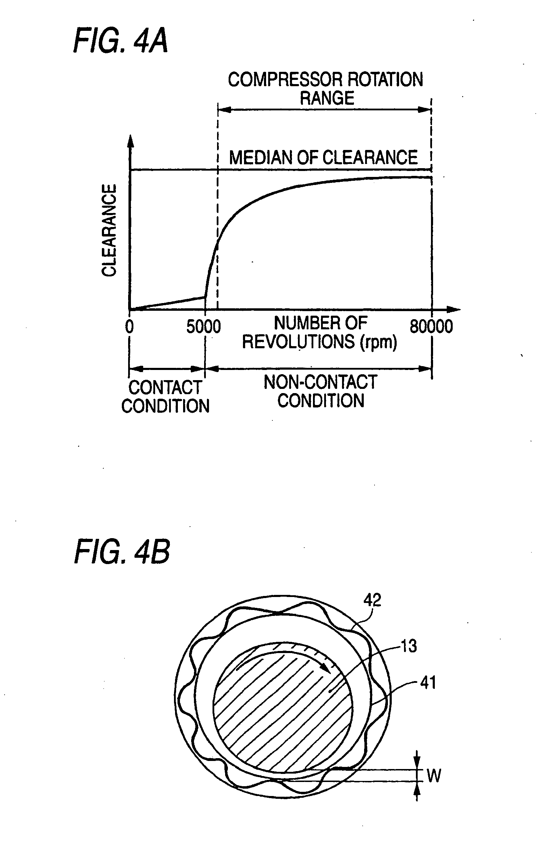

When the rotation shaft 13 is not rotated, the top foils 41 of the radial foil bearings 21 and 22 are disposed eccentric with respect to the rotation shaft 13, and therefore are held in contact with one portion of the outer periphery of the rotation shaft 13. A clearance W (A median of the clearance = (the inner diameter of the top foil - the outer diameter of the rotation shaft)/2) between the rotation shaft 13 and the top foil 41 which is shown in Fig. 4B increases as the rotation speed (the number of revolutions per unit time) of the rotation shaft 13 increases. This clearance W has characteristics as shown in Fig. 4A, and at an initial stage of the rotation, the clearance W gradually increases from zero (0) with the increase of the rotational speed, and then abruptly increases when the rotational speed reaches a certain level, so that the rotation shaft 13 and the top foil 41 shift into a completely non-contact condition. Therefore, the rotational speed at which the clearance abruptly begins to increase is defined as a floating rotational speed for the radial foil bearings 21 and 22, and by setting a compressor rotation range in which the minimum rotational speed is set to a level slightly larger than this floating rotational speed, the non-contact condition can be positively maintained.

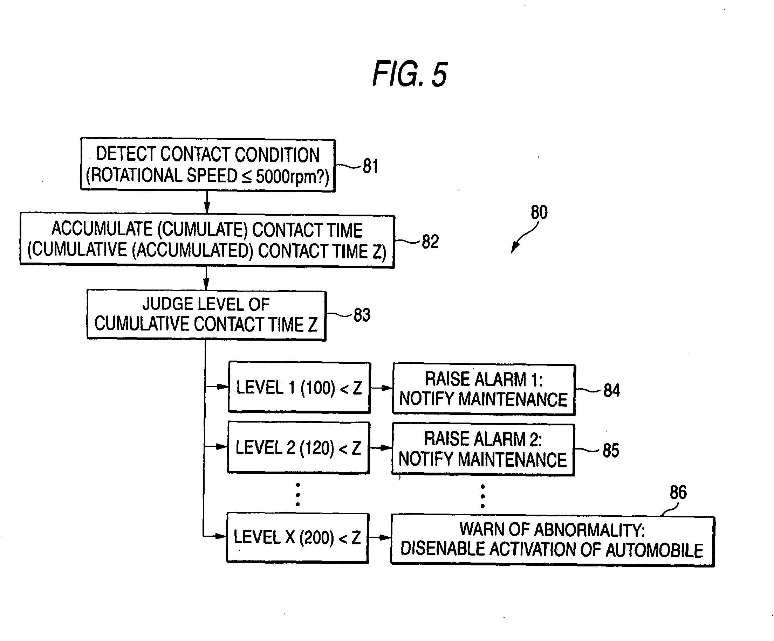

On the basis of the above findings, a bearing life diagnostic unit 80 shown in Fig. 5 is provided at the control device 61.

As shown in Fig. 5, the bearing life diagnostic unit 80 comprises a contact condition detection unit 81 which determines that the radial foil bearings 21 and 22 are in a contact condition when the rotational speed of the rotation shaft 13 obtained from the rotation sensor 36 is below the predetermined value, cumulative contact time accumulating unit 82 for accumulating (cumulating) time Z during which the rotational speed of the rotation shaft 13 has been below the predetermined value, a level judgment unit 83 for comparing the obtained cumulative (accumulated) contact time Z with a plurality of predetermined times of different levels, a warning unit 84, 85, ... each for giving a warning to the driver when the cumulative contact time reaches a predetermined warning time, and an activation disenabling unit 86 for disenabling the activation of an automobile when the cumulative contact time reaches a predetermined activation-disenabling time larger than the predetermined warning time.

The predetermined value of the rotational speed is defined by the rotational speed at which the clearance begins to abruptly increase as described above, and in the example shown in Fig. 4A, this predetermined value is 5, 000 rpm. During the operation of the fuel cell, the rotational speed of the rotation shaft 13 is always monitored by the rotation sensor 36, and the cumulative time Z during which the rotational speed of the rotation shaft 13 has been below the predetermined value is obtained by the cumulative contact time accumulating unit 82. With respect to the cumulative time Z, the plurality of levels requiring maintenance and the level X representing abnormality, that is, the expiration of a bearing lifetime, are beforehand set, and the measured cumulative time is compared with these levels in the level judgment unit 83. When the cumulative time (accumulated time) reaches any of the predetermined warning levels, a warning is given to the driver by the corresponding warning unit 84, 85, .., thereby urging the driver to perform a suitable maintenance so that the performance can be maintained. When the cumulative time reaches the dangerous level X, the activation of the automobile is disenabled by the activation disenabling unit 86, thereby securing safety.

In the fuel cell compressor 1 of the above first embodiment, the support of the rotation shaft 13 in the radial direction is undertaken by the radial foil bearings 21 and 22, and the rotation shaft 13, when rotated, is supported in a non-contact condition in the radial direction by dynamic pressures produced in the foil bearings 21 and 22. The support of the rotation shaft 13 in the axial direction is undertaken by the axial magnetic bearing 23, and when an axial force acting on the impeller 12 in the axial direction varies, an attractive force commensurate with this variation is generated by the axial electromagnet 24. With this construction, the rotation shaft 13 is stably supported in a non-contact condition without undergoing the influence of a rotation load variation, and the smooth rotation thereof is ensured, and besides the durability (lifetime) thereof is excellent. Furthermore, an optimum warning regarding the bearing lifetime is given by the bearing life diagnostic unit 80, thereby securing high safety.

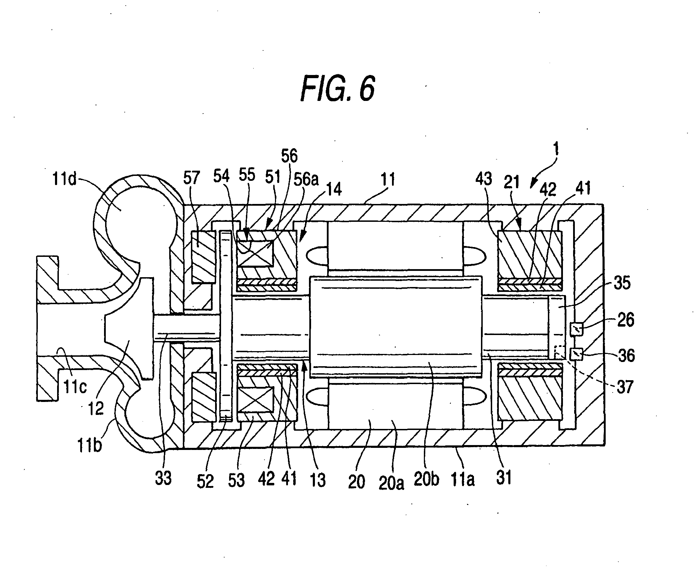

Fig. 6 schematically shows the construction of a second embodiment of a fuel cell compressor of the invention. This fuel cell compressor 1 differs from the first embodiment (in which the axial electromagnet 24 is separate from the radial foil bearings 21 and 22) in that an axial electromagnet 56 of an axial magnetic bearing 55 is formed integrally with one radial foil bearing 51. In the following description, the same construction as that of the first embodiment will be designated by identical reference numerals, and explanation thereof will be omitted.

In Fig. 6, the rear radial foil bearing 51 is formed into an axial electromagnet-incorporating bearing. A flange portion 52 of a rotation shaft 13 is formed at a rear end of a larger-diameter portion 31 of the rotation shaft 13. The radial foil bearing 51 having the axial electromagnet 56 formed integrally therewith comprises a flexible top foil 41 having a bearing surface radially opposed to the rotation shaft 13, a bump foil 42 supporting the top foil 41, an outer ring 53 holding the top foil 41 and the bump foil 42 between it and the rotation shaft 13, and an electromagnet coil 56a fitted in an annular recess 54 formed in a rear end surface of the outer ring 53. The annular recess 54 in the outer ring 53 is opposed to the flange portion 52 of the rotation shaft 13. The outer ring 53 is made of a magnetic material, and serves also as an electromagnet yoke for the axial electromagnet 56. A permanent magnet 57 is provided at a rear wall of a rotation shaft support portion 11a of a casing 11, and is opposed to the outer ring 53 through the flange' 52. Thus, the axial electromagnet 56 is formed by the outer ring 53 of the rear radial foil bearing 51 and the electromagnet coil 56a fitted in the annular recess 54 in the outer ring 53, and the axial magnetic bearing 55 is formed by this axial electromagnet 56 and the permanent magnet 57 opposed thereto.

In the fuel cell compressor 1 of this second embodiment, the support of the rotation shaft 13 in the radial direction is undertaken by radial foil bearings 21 and 51, and the rotation shaft 13, when rotated, is supported in a non-contact condition in the radial direction by dynamic pressures produced in the foil bearings 21 and 51- The support of the rotation shaft 13 in the axial direction is undertaken by the axial magnetic bearing 55, and when an axial force acting on an impeller 12 in the axial direction varies, an attractive force commensurate with this variation is generated by the axial electromagnet 56. with this construction, the rotation shaft 13 is stably supported in a non-contact condition without undergoing the influence of a rotation load variation, and the smooth rotation thereof is ensured, and besides the durability (lifetime) thereof is excellent. Furthermore, in this second embodiment, the axial electromagnet 56 of the axial magnetic bearing 55 is formed integrally with the rear radial foil bearing 51, and therefore as compared with the first embodiment, the axial length of the compressor is reduced by an amount equal to the axial length of the axial electromagnet, and a natural frequency increases so that a high-speed rotation can be achieved, and besides the fuel cell compressor 1 of a compacter design can be obtained.

A control device 61 of the second embodiment is identical to that of the first embodiment, and by this control device 61, the rotation shaft 13 is controlled so as to always rotate at a rotational speed higher than a floating rotation speed for the radial foil bearings 21 and 51, and as a result loads on the radial foil bearings 21 and 51 are reduced, so that the lifetime of these bearings can be prevented from being shortened. And besides, a suitable warning regarding the bearing lifetime is given by a bearing life diagnostic unit 80, thereby securing high safety.

Incidentally, instead of the rear radial foil bearing 51, the front radial foil bearing 21 can be formed into an axial magnetic bearing-incorporating bearing. In this case, the flange portion 52 of the rotation shaft 13 is provided in the vicinity of a rotor 20b mounted on a front portion of the rotation shaft 13, and as described above with reference to Fig. 6, the permanent magnet 57 is disposed at the rear side of this flange portion, while the axial electromagnet 56 is disposed at the front side thereof.

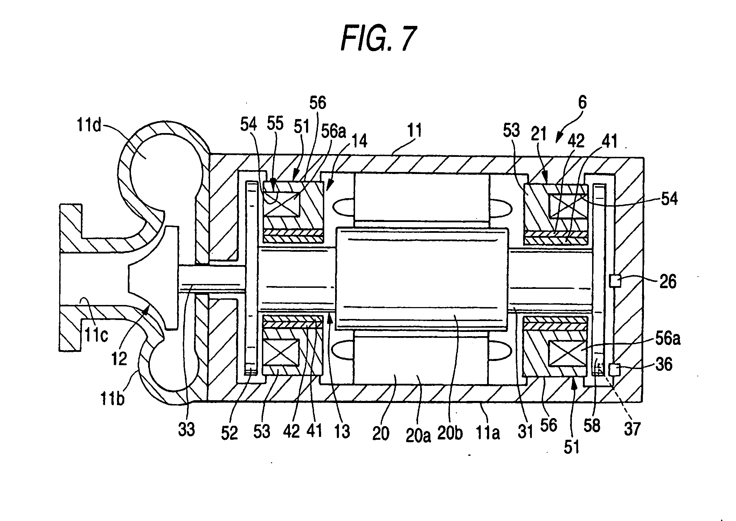

In each of the above first and second embodiments, although the axial magnetic bearing 23, 55 comprises the permanent magnet 25, 57 and the electromagnet 24, 56, it may comprises a pair of electromagnets 56 and 56. This embodiment is shown in Fig. 7.

This embodiment differs from the second embodiment in that the permanent magnet 57 provided at the rear portion in the second embodiment is replaced by the axial electromagnet 56 formed integrally with a front radial foil bearing 51. In the following description, the same construction as that of the second embodiment will be designated by identical reference numerals, and explanation thereof will be omitted.

In Fig. 7, the front radial foil bearing 51 is formed into an axial electromagnet-incorporating bearing, and with this construction the permanent magnet 57 provided at the rear portion in Fig. 6 is omitted, and a flange portion 58 opposed to the axial electromagnet 56 is additionally formed at a front end of a rotation shaft 13. The front radial foil bearing 51 having the axial electromagnet 56 formed integrally therewith is similar to the front radial foil bearing of the second embodiment, but is reversed in the front-rear direction. This front radial foil bearing 51 comprises a flexible top foil 41 having a bearing surface radially opposed to the rotation shaft 13, a bump foil 42 supporting the top foil 41, an outer ring 53 holding the top foil 41 and the bump foil 42 between it and the rotation shaft 13, and an electromagnet coil 56a which is fitted in an annular recess 54 formed in a front end surface of the outer ring 53, and is opposed to the flange portion 58 of the rotation shaft 13. The outer ring 53 serves also as an electromagnet yoke for the axial electromagnet 56. The front axial electromagnet 56 is formed by the outer ring 53 of the front radial foil bearing 51 and the electromagnet coil 56a fitted in the annular recess 54 in the outer ring 53, and the axial magnetic bearing 55 is formed by the front axial electromagnet 56 and the rear axial electromagnet 56.

In the fuel cell compressor 1 of this third embodiment, the support of the rotation shaft 13 in the radial direction is undertaken by the radial foil bearings 51 and 51, and the rotation shaft 13, when rotated, is supported in a non-contact condition in the radial direction by dynamic pressures produced in the foil bearings 51 and 51. The support of the rotation shaft 13 in the axial direction is undertaken by the axial magnetic bearing 55, and when an axial force acting on an impeller 12 in the axial direction varies, an attractive force commensurate with this variation is generated by the axial electromagnet 56. With this construction, the rotation shaft 13 is stably supported in a non-contact condition without undergoing the influence of a rotation load variation, and the smooth rotation thereof is ensured, and besides the durability (lifetime) thereof is excellent. Furthermore, in this third embodiment, the pair of axial electromagnets 56 of the axial magnetic bearing 55 are formed integrally with the radial foil bearings 51, respectively, and therefore as compared with the first embodiment, the axial length of the compressor is reduced by an amount equal to the axial length of the axial electromagnet, and a natural frequency increases so that a high-speed rotation can be achieved, and besides the fuel cell compressor 1 of a compacter design can be obtained.

A control device 61 of the third embodiment is identical to that of the first embodiment, and by this control device 61, the rotation shaft 13 is controlled so as to always rotate at a rotational speed higher than a floating rotation speed for the radial foil bearings 51 and 51, and as a result loads on the radial foil bearings 51 and 51 are reduced, so that the lifetime of these bearings can be prevented from being shortened. And besides, a suitable warning regarding the bearing lifetime is given by a bearing life diagnostic unit 80, thereby securing high safety.

## Claims

1. A compressor (1) for a fuel cell comprising:
a casing (11);
a rotation shaft (13) including an impeller (12) formed at one end thereof and rotatable within the casing;
a pair of radial foil bearings (21,22,51) for supporting the rotation shaft in a radial direction thereof, the pair of radial foil bearing being mounted in concentric relation to the rotation shaft;
a control-type axial magnetic bearing (23,55) for supporting the rotation shaft in an axial direction, the control-type axial magnetic bearing being opposed to the rotation shaft in the axial direction; and
a control device (61) that controls the rotation shaft, includes a bearing life diagnostic unit for accumulating times during which a rotational speed of the rotation shaft is below a predetermined value to obtain a cumulative contact time, and judges a bearing lifetime based on the obtained cumulative contact time,
wherein air is compressed in a space within a gas passage portion (11b) of the casing by rotation of the impeller, and is supplied to the fuel cell.

2. The compressor according to claim 1, wherein the bearing life diagnostic unit (80) includes a warning (84,85) unit for giving a warning to a driver when the cumulative contact time reaches a predetermined warning time, and an activation disenabling unit (86) for disenabling an activation of an automobile when the cumulative contact time reaches a predetermined activation-disenabling time larger than the predetermined warning time.

## Patentansprüche

1. Kompressor (1) für eine Brennstoffzelle, umfassend:
ein Gehäuse (11);
eine Drehwelle (13) einschließlich eines Flügelrads (12), das an einem Ende davon ausgebildet und innerhalb des Gehäuses drehbar ist;
ein Paar von radialen Folienlagern (21, 22, 51) zum Lagern der Drehwelle in einer radialen Richtung derselben, wobei das Paar von radialen Folienlagern in konzentrischem Verhältnis zur Drehwelle montiert ist;
ein gesteuertes axiales Magnetlager (23, 55) zum Lagern der Drehwelle in einer axialen Richtung, wobei das gesteuerte axiale Magnetlager der Drehwelle in der axialen Richtung gegenüberliegt; und
eine Steuervorrichtung (61), welche die Drehwelle steuert, umfasst eine Lagerlaufzeit-Diagnoseeinheit zum Aufrechnen der Zeiten, während derer eine Drehzahl der Drehwelle unter einem vorbestimmten Wert liegt, um eine kumulierte Kontaktzeit zu erhalten, und beurteilt eine Lagerstandzeit auf der Grundlage der erhaltenen kumuliertren Kontaktzeit,
wobei Luft in einem Raum innerhalb eines Gasdurchgangsbereichs (11 b) des Gehäuses durch Drehung des Flügelrads komprimiert und der Brennstoffzelle zugeführt wird.

2. Kompressor nach Anspruch 1, wobei die Lagerlaufzeit-Diagnoseeinheit (80) eine Warneinheit (84, 85), um eine Warnung an einen Fahrer auszugeben, wenn die kumulierte Kontaktzeit eine vorbestimmte Warnzeit erreicht, und eine Startverhinderungseinheit (86) zum Verhindern eines Starts eines Kraftfahrzeugs, wenn die kumulierte Kontaktzeit eine vorbestimmte Startverhinderungszeit erreicht, die größer als die vorbestimmte Warnzeit ist, umfasst.

## Revendications

1. Compresseur (1) pour pile à combustible comprenant :
un carter (11) ;
un arbre de rotation (13) comprenant un rotor (12) formé à une extrémité de celui-ci et rotatif à l'intérieur du carter ;
une paire de paliers à feuille radiaux (21, 22, 51) pour supporter l'arbre de rotation dans une direction radiale de celui-ci, la paire de paliers à feuille radiaux étant montée en relation concentrique avec l'arbre de rotation ;
un palier magnétique axial de type à commande (23, 55) pour supporter l'arbre de rotation dans une direction axiale, le palier magnétique axial de type à commande étant opposé à l'arbre de rotation dans la direction axiale ; et
un dispositif de commande (61) qui commande l'arbre de rotation, comprend une unité de diagnostic de durée de vie de palier pour cumuler les temps pendant lesquels une vitesse de rotation de l'arbre de rotation est inférieure à une valeur prédéterminée pour obtenir un temps de contact cumulé, et juge une durée de vie de palier sur la base du temps de contact cumulé obtenu,
dans lequel de l'air est comprimé dans un espace à l'intérieur d'une partie de passage de gaz (11 b) du carter par rotation du rotor et est fourni à la pile combustible.

2. Compresseur selon la revendication 1, dans lequel l'unité de diagnostic de durée de vie de palier (80) comprend une unité d'avertissement (84, 85) pour donner un avertissement à un conducteur lorsque le temps de contact cumulé atteint un temps d'avertissement prédéterminé, et une unité d'annulation d'activation (86) pour annuler une activation d'une automobile lorsque le temps de contact cumulé atteint un temps d'annulation d'activation prédéterminé supérieur au temps d'avertissement prédéterminé.
